# EUROPÄISCHE PATENTANMELDUNG

(11) **EP 1 600 362 A1**
(43) Veröffentlichungstag der Anmeldung: **30.11.2005**
(21) Anmeldenummer: 05008609.9
(22) Anmeldetag: 20.04.2005
(51) Int. Cl.: B62D 25/20

(54) **Bodenstruktur eines Kraftfahrzeugs**

(30) Priorität: 28.05.2004 DE 102004026299
(71) Anmelder: DaimlerChrysler AG, 70567 Stuttgart (DE)
(72) Erfinder: Reinhardt, Oliver, 70599 Stuttgart (DE)

(57) **Zusammenfassung**

Die Erfindung betrifft eine Bodenstruktur eines Kraftfahrzeugs mit einem Hauptboden (2), der in Fahrzeuglängsrichtung durch einen Mitteltunnel (5) in zwei Hauptbodenhälften (7,8) unterteilt ist, der eine Mitteltunnelverstärkung umfasst.

Um eine Bodenstruktur zu schaffen, die eine hohe Steifigkeit und ein geringes Gewicht aufweist, ist der Mitteltunnel (5) durch mehrere Verstärkungsstreben (21,22;28,29;33,34) überbrückt, die fest mit dem Mitteltunnel (5) verbunden sind.

## Beschreibung

Die Erfindung betrifft eine Bodenstruktur eines Kraftfahrzeugs mit einem Hauptboden, der in Fahrzeuglängsrichtung durch einen Mitteltunnel in zwei Hauptbodenhälften unterteilt ist, der eine Mitteltunnelverstärkung umfasst.

Aus der deutschen Patentschrift DE 195 31 957 C2 ist eine Karosseriestruktur eines Kraftfahrzeugs bekannt, die eine linke und rechte B-Säule, in Längsrichtung des Fahrzeugs verlaufende Dachseitenholme, in Längsrichtung des Fahrzeugs verlaufende Seitenschweller, eine in Querrichtung des Fahrzeugs verlaufende und mit den B-Säulen sowie mit den Dachseitenholmen verbundene Mitteldachstrebe, ein Bodenblech und ein in Längsrichtung des Fahrzeugs am Bodenblech verlaufenden Mitteltunnel umfasst. Darüber hinaus weist die bekannte Karosseriestruktur in Querrichtung des Fahrzeugs verlaufende und an einem Außenende mit den unteren Enden der B-Säule sowie mit den Seitenschwellern verbundene Versteifungen auf, wobei jede Versteifung mindestens einen U-förmigen Kanal und einen geschlossenen Querschnitt aufweist, der in der Versteifung vorgesehen und durch den U-förmigen Kanal und das Bodenblech gebildet ist. Des Weiteren weist die bekannte Karosseriestruktur eine Tunnelverstärkung auf, die mit jeder Versteifung und mit dem Mitteltunnel unter dem Mitteltunnel verbunden ist. Außerdem weist die bekannte Karosseriestruktur Anschlussteile zum Verbinden der Mitteldachstrebe mit den B-Säulen auf, wobei von den B-Säulen, der Mitteldachstrebe, den Versteifungen und der Tunnelverstärkung eine kontinuierliche geschlossene Querschnittstruktur gebildet wird. Aus der deutschen Patentschrift DE 196 27 610 C2 ist ein Fahrzeugboden mit einer Querträgeranordnung bekannt, die ein auf den Fahrzeugboden aufgesetztes und auf Höhe eines Fahrzeugsitzes fest mit dem Fahrzeugboden verbundenes Querträgerprofil aufweist, das sich an einem äußeren Stützpunkt an einem Seitenschweller und an einem inneren Stützpunkt an einem Mitteltunnel abstützt. Der bekannte Fahrzeugboden ist dadurch gekennzeichnet, dass die Querträgeranordnung eine mit dem Querträgerprofil einen starren Verbund bildende Zusatzverstrebungsstruktur aufweist, die auf den Fahrzeugboden aufgesetzt ist und sich an einem in Abstand zu dem inneren Stützpunkt vorgesehenen weiteren Stützpunkt am Mitteltunnel abstützt. Aus der deutschen Patentschrift DE 44 42 741 C2 ist eine Bodenstruktur für einen Personenkraftwagen mit zwei sich über nahezu die gesamte Fahrzeuglänge erstreckenden Längsträgern bekannt, zwischen denen mehrere in Fahrzeuglängsrichtung hintereinander angeordnete Profilkästen vorgesehen sind. Die bekannte Bodenstruktur ist dadurch gekennzeichnet, dass jeder Profilkasten rechteckig gestaltet und aus hochkant angeordneten Kastenteilen zusammengesetzt ist, mit seinen seitlichen Kastenteilen an die Längsträger starr angebunden ist und mit zwei diagonal verlaufenden und sich kreuzenden Verstärkungsstegen versehen ist, die hochkant in dem Profilkasten angeordnet sind, wobei die Höhe der Verstärkungsstege der Höhe der Kastenteile entspricht. Aus der deutschen Offenlegungsschrift DE 42 32 574 A1 ist eine torsionssteife Fahrzeug-Bodengruppe mit einer vierseitigen Trägeranordnung, von der zwei sich gegenüberliegende Spitzen auf einer Fahrzeuglängsachse liegen, und mit zwei schräg zu dieser verlaufenden, mit der vierseitigen Trägeranordnung in Verbindung stehenden Trägern bekannt. Die bekannte Fahrzeug-Bodengruppe ist dadurch gekennzeichnet, dass die Träger eine kreuzähnliche Trägeranordnung bilden und in ihrem mit dem Mittelpunkt der vierseitigen Trägeranordnung zumindest ungefähr zusammenfallenden Kreuzungspunkt starr miteinander verbunden sind.

Aufgabe der Erfindung ist es, eine Bodenstruktur eines Kraftfahrzeugs mit einem Hauptboden, der in Fahrzeuglängsrichtung durch einen Mitteltunnel in zwei Hauptbodenhälften unterteilt ist, der eine Mitteltunnelverstärkung umfasst, zu schaffen, die eine hohe Steifigkeit, insbesondere Torsionssteifigkeit, und ein geringes Gewicht aufweist.

Die Aufgabe ist bei einer Bodenstruktur eines Kraftfahrzeugs mit einem Hauptboden, der in Fahrzeuglängsrichtung durch einen Mitteltunnel in zwei Hauptbodenhälften unterteilt ist, der eine Mitteltunnelverstärkung umfasst, dadurch gelöst, dass der Mitteltunnel durch mehrere Verstärkungsstreben überbrückt ist, die fest mit dem Mitteltunnel verbunden sind und nicht ausschließlich in Fahrzeugquerrichtung verlaufen. Durch die Verstärkungsstreben wird der offene Querschnitt des Mitteltunnels, der vorzugsweise einen im Wesentlichen U-förmigen Querschnitt aufweist, geschlossen, wodurch die Torsionssteifigkeit deutlich erhöht wird. Im Vergleich zu einer an dem Mitteltunnel befestigten Verstärkungsplatte haben die Verstärkungsstreben den Vorteil, dass eine negative Wärmebeeinflussung der Abgasanlage des Kraftfahrzeugs verhindert wird.

Ein bevorzugtes Ausführungsbeispiel der Bodenstruktur ist dadurch gekennzeichnet, dass die Verstärkungsstreben als Zug-Druck-Streben ausgebildet sind. Das hat den Vorteil, dass nur eine vorzugsweise diagonal angeordnete Verstärkungsstrebe über einem Längsabschnitt des Mitteltunnels angeordnet sein muss.

Ein bevorzugtes Ausführungsbeispiel der Bodenstruktur ist dadurch gekennzeichnet, dass mindestens zwei Verstärkungsstreben paarweise diagonal zueinander an dem Mitteltunnel befestigt sind. Die Verstärkungsstreben sind vorzugsweise an ihren Enden mit dem Mitteltunnel beziehungsweise dem Hauptboden verschraubt. Sie können aber auch auf andere Art und Weise an dem Mitteltunnel beziehungsweise an dem Hauptboden befestigt sein.

Ein weiteres bevorzugtes Ausführungsbeispiel der Bodenstruktur ist dadurch gekennzeichnet, dass mehrere Verstärkungsstreben jeweils paarweise diagonal zueinander in jeweils einem Längsabschnitt des Mitteltunnels angeordnet sind. Vorzugsweise sind an dem Mitteltunnel Anschlussbereiche für die Hauptbodenhälften vorgesehen, die zum Beispiel flanschartig ausgebildet sind. Die Anschlussbereiche des Mitteltunnels sind in einem Längsabschnitt, der auch als Feld bezeichnet, durch je zwei gekreuzte Verstärkungsstreben miteinander verbunden.

Ein weiteres bevorzugtes Ausführungsbeispiel der Bodenstruktur ist dadurch gekennzeichnet, dass die Verstärkungsstreben als reine Zugstreben ausgebildet sind. Wenn die Verstärkungsstreben nur auf Zug belastet werden, dann kann deren Querschnitt reduziert werden, was sich positiv auf den erforderlichen Bauraum (Bodenfreiheit) der Streben sowie auf das Gesamtgewicht des Kraftfahrzeugs auswirkt.

Ein weiteres bevorzugtes Ausführungsbeispiel der Bodenstruktur ist dadurch gekennzeichnet, dass der Mitteltunnel durch mindestens eine Querstrebe überbrückt ist, deren Enden an jeweils einem Ende einer Verstärkungsstrebe angeordnet sind. Die Querstreben sind vorzugsweise als Druckstreben ausgelegt.

Ein weiteres bevorzugtes Ausführungsbeispiel der Bodenstruktur ist dadurch gekennzeichnet, dass der Mitteltunnel durch eine Getriebebrücke überbrückt ist, deren Enden an jeweils einem Ende einer Verstärkungsstrebe angeordnet sind. Die Getriebebrücke kann als Feldbegrenzung verwendet werden. Dann übernehmen die Verstärkungsstreben, im Fall eines Unfalls, eine Stützfunktion für die Getriebebrücke.

Ein weiteres bevorzugtes Ausführungsbeispiel der Bodenstruktur ist dadurch gekennzeichnet, dass die Verstärkungsstreben aus Metall gebildet sind. Die Zugstreben können zum Beispiel aus Stahl oder aus Aluminium gebildet sein.

Ein weiteres bevorzugtes Ausführungsbeispiel der Bodenstruktur ist dadurch gekennzeichnet, dass die Verstärkungsstreben aus Faserverbundmaterial gebildet sind. Bei dem Faserverbundmaterial handelt es sich vorzugsweise um einen mit Glas- und/oder Kohlefasern verstärkten Kunststoff.

Bei einem Kraftfahrzeug, insbesondere einem Personenkraftwagen, ist die oben angegebene Aufgabe durch eine vorab beschriebene Bodenstruktur gelöst.

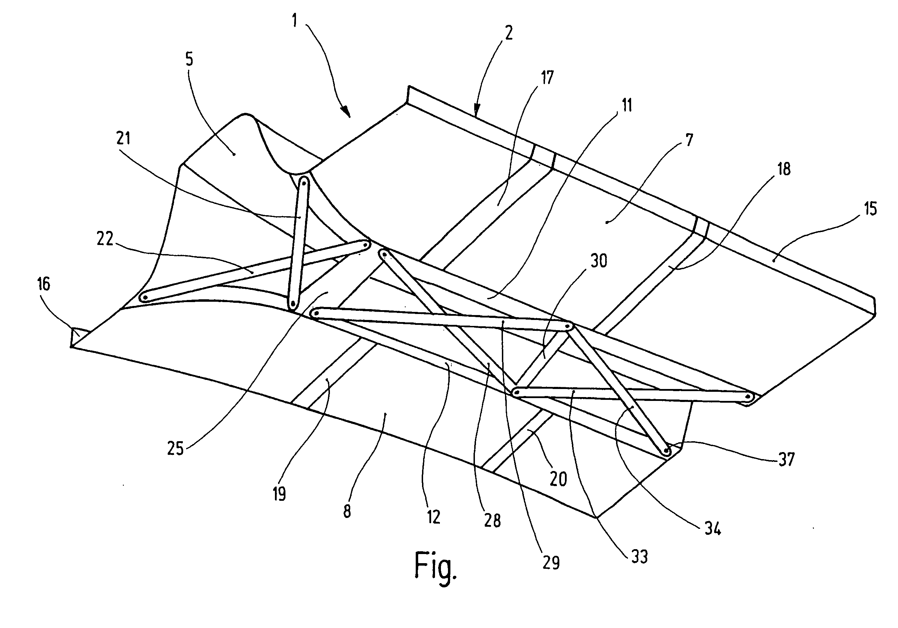

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

In der beiliegenden Figur ist eine erfindungsgemäße Bodenstruktur perspektivisch dargestellt.

Die beiliegende Figur zeigt eine Bodenstruktur 1 mit einem Hauptboden 2, der im Wesentlichen die Gestalt einer ebenen Platte aufweist. Der Hauptboden 2 ist durch einen Mittelkanal 5 in zwei Hauptbodenhälften 7, 8 unterteilt. Die Hauptbodenhälfte 7 wird auch als linke Hauptbodenhälfte bezeichnet. Die Hauptbodenhälfte 8 wird auch als rechte Hauptbodenhälfte bezeichnet. Der Mitteltunnel 5 dient unter anderem zur Aufnahme einer Welle, insbesondere einer Kardanwelle, die zur Kraftübertragung dient.

Die Bodenstruktur 1 wird auch als Plattformrahmen bezeichnet. An dem Mitteltunnel 5 sind Anschlussbereiche 11 und 12 für die Hauptbodenhälften 7 und 8 ausgebildet. An den Hauptbodenhälften 7 und 8 sind außen seitlich Anschlussbereiche 15, 16 für (nicht dargestellte) Längsträger vorgesehen. Darüber hinaus sind an den Hauptbodenhälften 7, 8 Querträger 17, 18; 19, 20 befestigt. Die Längs- und Querträger sowie der Mitteltunnel, der auch als Mittelträger bezeichnet wird, sind vorzugsweise durch Schweißen fest mit den Hauptbodenhälften zu einem Plattformrahmen verbunden.

Am vorderen Ende des Mitteltunnels 5 sind an den Abschlussbereichen 11, 12 zwei Verstärkungsstreben 21, 22 kreuzweise befestigt. Die Enden der Verstärkungsstreben 21, 22 sind in den Anschlussbereichen 11, 12 zum Beispiel durch Schraubverbindungen sowohl an dem Mitteltunnel 5 als auch an den Hauptbodenhälften 7, 8 befestigt.

An den, in Fahrzeuglängsrichtung betrachtet, hinteren Enden der Verstärkungsstreben 21, 22 ist eine Getriebebrücke 25 angeordnet. Die Getriebebrücke 25 ist zwischen den Anschlussbereichen 11, 12 des Mitteltunnels 5 und den Verstärkungsstreben 21, 22 angeordnet. Die Befestigung der Getriebebrücke 25 an dem Mitteltunnel beziehungsweise den Hauptbodenhälften 7, 8 kann durch dieselben Schraubverbindungen erfolgen, durch welche die Verstärkungsstreben 21, 22 an dem Mitteltunnel 5 beziehungsweise den Hauptbodenhälften 7, 8 befestigt sind. Der Abschnitt des Mitteltunnels 5, der durch die Verstärkungsstreben 21, 22 überbrückt wird, wird auch als Feld bezeichnet, das in Längsrichtung durch die Getriebebrücke 25 begrenzt wird.

Die Verstärkungsstreben 21, 22 sind an einer Seite der Getriebebrücke 25 befestigt. An der anderen Seite der Getriebebrücke 25 sind zwei Enden von zwei weiteren Verstärkungsstreben 28, 29 angeordnet, die ebenfalls kreuzweise über den Mitteltunnel 5 angeordnet und mit ihren Enden an den Anschlussbereichen 11, 12 des Mitteltunnels beziehungsweise den Hauptbodenhälften 7, 8 befestigt sind. Die anderen Enden der Verstärkungsstreben 28, 29 sind im Bereich einer Querstrebe 30 verbunden, die quer zur Fahrzeuglängsrichtung und parallel zu der Getriebebrücke 25 den Mitteltunnel 5 überbrückt.

Die Querstrebe 30 liegt auf zwei gegenüberliegenden Abschnitten der Anschlussbereiche 11, 12 auf, auf denen auch die hinteren Enden der Verstärkungsstreben 28, 29 sowie die vorderen Enden von Verstärkungsstreben 33, 34 aufliegen. Die Befestigung der Querstrebe 30 und der Verstärkungsstreben 28, 33 beziehungsweise 28, 34 kann jeweils durch eine einzige Schraubverbindung erfolgen, wie jeweils durch einen Punkt angedeutet ist. Die hinteren Enden der Verstärkungsstreben 33, 34 sind an den hinteren Enden der Anschlussbereiche 11, 12 befestigt. Durch einen Punkt 37 ist eine Schraubverbindung angedeutet.

Durch den Einbau der diagonal verlaufenden Verstärkungsstreben, die auf Zug belastet werden, wird der Mitteltunnel im Bereich des Bodens strukturmechanisch schubtragend geschlossen. Dabei verbinden in je einem Feld jeweils zwei gekreuzte Verstärkungsstreben die beiden Anschlussbereiche des Mitteltunnels zum Hauptboden unter der Antriebswelle beziehungsweise der Abgasanlage. Die Getriebebrücke wird als Feldbegrenzung verwendet. Die vorderen Verstärkungsstreben 21, 22 übernehmen eine Stützfunktion für die Getriebebrücke 25 im Fall eines Unfalls.

Durch den Einsatz der Verstärkungsstreben wird der offene Querschnitt des Mitteltunnels 5 geschlossen. Der durch die Verstärkungsstreben geschlossene Mitteltunnel 5 weist eine deutlich verbesserte Torsionssteifigkeit auf. Insbesondere bei offenen Fahrzeugen, wie zum Beispiel Roadster oder Cabriolets, bewirkt das eine effiziente Erhöhung der Rohbau-Eigensteifigkeit, und zwar ohne schädliche Vergrößerung der erforderlichen Rohbau-Bauräume, wie beispielsweise bei einer Vergrößerung des Tunnelbauraums in den Innenraum des Fahrzeugs. Die Verstärkungsstreben sind als reine Zugstreben ausgebildet, was eine gewichts- und kostenoptimale Auslegung ermöglicht.

Durch die offene Gestaltung ergibt sich keine thermische Beeinträchtigung der Abgasanlage. Die Ausführung der Verstärkungsstreben als Montageteile ermöglicht eine problemlose Einbindung in einen bestehenden Montageprozess.

## Patentansprüche

1. Bodenstruktur eines Kraftfahrzeugs mit einem Hauptboden (2), der in Fahrzeuglängsrichtung durch einen Mitteltunnel (5) in zwei Hauptbodenhälften (7,8) unterteilt ist, der eine Mitteltunnelverstärkung umfasst,
**dadurch gekennzeichnet,**
**dass** der Mitteltunnel (5) durch mehrere Verstärkungsstreben (21,22;28,29;33,34) überbrückt ist, die fest mit dem Mitteltunnel (5) verbunden sind.

2. Bodenstruktur nach Anspruch 1,
**dadurch gekennzeichnet,**
**dass** die Verstärkungsstreben als Zug-Druck-Streben ausgelegt sind.

3. Bodenstruktur nach Anspruch 2,
**dadurch gekennzeichnet,**
**dass** jeweils eine Verstärkungsstrebe einen Längsabschnitt des Mitteltunnels (5) überbrückt.

4. Bodenstruktur nach Anspruch 1,
**dadurch gekennzeichnet,**
**dass** mindestens zwei Verstärkungsstreben (21,22;28,29;33,34) paarweise diagonal zueinander an dem Mitteltunnel (5) befestigt sind.

5. Bodenstruktur nach Anspruch 4,
**dadurch gekennzeichnet,**
**dass** mehrere Verstärkungsstreben (21,22;28,29;33,34) jeweils paarweise diagonal zueinander in jeweils einem Längsabschnitt des Mitteltunnels (5) angeordnet sind.

6. Bodenstruktur nach einem der Ansprüche 4 bis 5,
**dadurch gekennzeichnet,**
**dass** die Verstärkungsstreben (21,22;28,29;33,34) als reine Zugstreben ausgebildet sind.

7. Bodenstruktur nach einem der Ansprüche 4 bis 6,
**dadurch gekennzeichnet,**
**dass** der Mitteltunnel (5) durch mindestens eine Querstrebe (30) überbrückt ist, deren Enden an jeweils einem Ende einer Verstärkungsstrebe (28,29;33,34) angeordnet sind.

8. Bodenstruktur nach einem der Ansprüche 4 bis 7,
**dadurch gekennzeichnet,**
**dass** der Mitteltunnel (5) durch eine Getriebebrücke (25) überbrückt ist, deren Enden an jeweils einem Ende einer Verstärkungsstrebe (21,22;28,29) angeordnet sind.

9. Bodenstruktur nach einem der vorhergehenden Ansprüche,
**dadurch gekennzeichnet,**
**dass** die Verstärkungsstreben (21,22;28,29;33,34) aus Metall gebildet sind.

10. Bodenstruktur nach einem der Ansprüche 1 bis 8,
**dadurch gekennzeichnet,**
**dass** die Verstärkungsstreben (21,22;28,29;33,34) aus Faserverbundmaterial gebildet sind.

11. Kraftfahrzeug mit einer Bodenstruktur (1) nach einem der vorhergehenden Ansprüche.
